# EUROPÄISCHE PATENTANMELDUNG

(11) **EP 4 509 735 A1**
(43) Veröffentlichungstag der Anmeldung: **19.02.2025**
(21) Anmeldenummer: 23191834.3
(22) Anmeldetag: 17.08.2023
(51) Int. Cl.: F16D 7/02

(54) **SENSORANORDNUNG ZUR SCHLUPFERKENNUNG AN EINER KUPPLUNG; EINE KUPPLUNG MIT EINER SOLCHEN SENSORANORDNUNG UND EINE GELENKWELLE MIT EINER SOLCHEN KUPPLUNG**

(71) Anmelder: Walterscheid GmbH, 53797 Lohmar (DE)
(72) Erfinder: JUNG, Thomas, 53177 Bonn (DE); KRÜGER, Max, 53797 Lohmar (DE)
(74) Vertreter: Neumann Müller Oberwalleney Patentanwälte PartG mbB

(57) **Zusammenfassung**

Sensoranordnung zur Schlupferkennung zwischen einem ersten Kupplungselement und einem zweiten Kupplungselement einer Kupplung, insbesondere einer Überlastkupplung, umfassend: eine Magnetfeldquelle (25), die ein erstes Ausgangsmagnetfeld erzeugt, ein erstes Magnetfeldbeeinflussungselement, das mit dem ersten Kupplungselement (16) verbindbar ist oder mit dem ersten Kupplungselement (16) integral ausgestaltet ist, ein zweites Magnetfeldbeeinflussungselement (28, 34), das mit dem zweiten Kupplungselement (17) verbindbar ist oder mit dem zweiten Kupplungselement (17) integral ausgestaltet ist, wobei die Magnetfeldquelle (25), das erste Magnetfeldbeeinflussungselement und das zweite Magnetfeldbeeinflussungselement (28, 34) so zueinander angeordnet sind, dass das Ausgangsmagnetfeld der Magnetfeldquelle von dem ersten Magnetfeldbeeinflussungselement und von dem zweiten Magnetfeldbeeinflussungselement (28, 34) in ein Überlagerungsmagnetfeld überführt wird, und einen Magnetfeldsensor (31), der ausgestaltet ist, eine das Überlagerungsmagnetfeld kennzeichnende Kenngröße zu messen. Eine Auswerteeinheit ermittelt aus der das Überlagerungsmagnetfeld kennzeichnenden Kenngröße den Schlupf der Kupplung und erzeugt in Abhängigkeit des Schlupfes ein Signal, das den Zustand der Kupplung charakterisiert.

## Beschreibung

Die vorliegende Erfindung betrifft eine Sensoranordnung zur Schlupferkennung an einer Kupplung mit einem ersten Kupplungselement und einem zweiten Kupplungselement, das mit dem ersten Kupplungselement koppelbar ist.

Blockieren angetriebenen Arbeitsmaschinen schlagartig, können die resultierenden Drehmomente aufgrund der abzubremsenden rotierenden Massen die Nenndrehmomente der Arbeitsmaschine um ein Vielfaches übertreffen und so die Arbeitsmaschine schwerwiegend schädigen. Sicherheitskupplungen schützen diese Antriebsmaschinen vor derartigen Drehmomentschlägen. Die Kupplung trennt bei Erreichung eines Grenzmoments beide Seiten des Antriebsstrangs zumindest zeitweise voneinander. Dabei kann die Trennung dauerhaft erfolgen, beispielsweise bei Scherbolzenkupplungen, oder die relative Verdrehung zweier Teile der Kupplung zueinander kann zeitweise ermöglicht werden, wie beispielweise bei der in DE 10 139 576 A1 gezeigten Überlast-Rutschkupplung.

Aus DE 39 06 050 A1 ist ein Antriebstrang einer landwirtschaftlichen Maschine bekannt, mit einer Überlastrutschkupplung, die eine von einem Traktor angetriebene Gelenkwelle mit einer an den Traktor angehängten Arbeitsmaschine verbindet. Die Kupplung wird von einer Sensoranordnung zur Schlupferkennung überwacht, die einen ersten mit einem Eingangsteil der Kupplung verbundenen Drehzahlsensor und einen zweiten mit einem Ausgangsteil der Kupplung verbundenen Drehzahlsensor aufweist. Die Drehzahlsensoren umfassen jeweils eine auf das Eingangsteil respektive das Ausgangsteil aufgesetzte Zahnscheibe und einen induktiven Drehzahlmesser. Der Schlupf in der Kupplung kann durch die Detektion von Drehzahlunterschieden zwischen dem Eingangsteil und dem Ausgangsteil festgestellt werden.

Hiervon ausgehend liegt der vorliegenden Erfindung die Aufgabe zugrunde, eine Sensoranordnung zur Schlupferkennung einer Kupplung bereitzustellen, die platzsparend ist und eine bauraumoptimierte Anordnung in der Kupplung ermöglicht. Eine weitere Aufgabe der vorliegenden Erfindung ist die Bereitstellung einer Kupplung, insbesondere für eine Gelenkwelle, mit einer solchen Sensoranordnung sowie die Bereitstellung einer Gelenkwelle mit einer solchen Kupplung.

Zur Lösung der Aufgabe wird eine Sensoranordnung zur Schlupferkennung an einer Kupplung mit einem ersten Kupplungselement und einem zweiten Kupplungselement, das mit dem ersten Kupplungselement koppelbar ist, vorgeschlagen, umfassend: eine Magnetfeldquelle, die ein erstes Ausgangsmagnetfeld erzeugt, ein erstes Magnetfeldbeeinflussungselement, das mit dem ersten Kupplungselement verbindbar ist oder mit dem ersten Kupplungselement integral ausgestaltet ist, ein zweites Magnetfeldbeeinflussungselement, das mit dem zweiten Kupplungselement verbindbar ist oder mit dem zweiten Kupplungselement integral ausgestaltet ist, wobei die Magnetfeldquelle, das erste Magnetfeldbeeinflussungselement und das zweite Magnetfeldbeeinflussungselement so zueinander angeordnet sind, dass das Ausgangsmagnetfeld der Magnetfeldquelle durch das erste Magnetfeldbeeinflussungselement und durch das zweite Magnetfeldbeeinflussungselement in ein Überlagerungsmagnetfeld überführt wird, und einen Magnetfeldsensor, der ausgestaltet ist, eine das Überlagerungsmagnetfeld kennzeichnende Kenngröße zu messen.

Die Sensoranordnung kann insbesondere an einer Überlastkupplung einer Gelenkwelle verwendet werden.

Ein Magnetfeldbeeinflussungselement kann beispielsweise ein separates Element sein, dass eine erhöhte magnetische Permeabilität oder eine verringerte magnetische Permeabilität gegenüber dem jeweiligen zugeordneten Kupplungselement aufweist. In einer anderen Ausgestaltung kann ein Magnetfeldbeeinflussungselement ein Abschnitt des jeweiligen Kupplungselements sein, dass eine erhöhte magnetische Permeabilität oder eine verringerte magnetische Permeabilität gegenüber einem anderen Abschnitt, insbesondere gegenüber dem Rest, des jeweiligen zugeordneten Kupplungselements aufweist. Der als Magnetfeldbeeinflussungselement ausgestaltete Abschnitt des jeweiligen Kupplungselements kann insbesondere bezüglich der Drehachse des Kupplungselements eine von rotationssymmetrisch abweichende Form aufweisen. Ein Magnetfeldbeeinflussungselement kann insbesondere ein ferromagnetischer Abschnitt des jeweiligen Kupplungselements sein. Ein Magnetfeldbeeinflussungselement kann zudem als Magnetfeldquelle, beispielsweise als Magnetelement oder als magnetisierter Abschnitt des jeweiligen Kupplungselements, ausgeführt sein.

In einer möglichen Ausführungsform kann der Magnetfeldsensor dazu ausgestaltet sein, an einem Messpunkt die das Überlagerungsmagnetfeld kennzeichnende Kenngröße zu messen. Der Messpunkt kann dabei durch die räumliche Anordnung und den Aufbau des Magnetfeldsensors definiert sein. Es versteht sich, dass der Messpunkt nicht einschränkend als nichtausgedehnter oder infinitesimaler Ort in einem Raum zu verstehen ist, sondern auch durch eine Messfläche in dem Raum definiert sein kann. Die Sensoranordnung kann genau einen Magnetfeldsensor aufweisen. Es ist aber auch denkbar, dass mehrere Magnetfeldsensoren jeweils eine das Überlagerungsmagnetfeld kennzeichnende Kenngröße messen.

Insbesondere kann der Magnetfeldsensor dazu ausgestaltet sein, an dem Messpunkt den Betrag der magnetischen Feldstärke oder den Betrag der magnetischen Flussdichte als kennzeichnende Kenngröße zu messen. Alternativ oder in Kombination kann der Magnetfeldsensor dazu ausgestaltet sein, an dem Messpunkt die Ausrichtung des Überlagerungsmagnetfeldes als kennzeichnende Größe zu messen. Der Magnetfeldsensor kann insbesondere dazu ausgestaltet sein, zumindest eine Koordinate eines Vektors der magnetischen Feldstärke oder eines Vektors der magnetischen Flussdichte zu messen. Es versteht sich somit das der Magnetfeldsensor ausgestaltet sein kann, eine, zwei oder drei Koordinaten des Vektors der magnetischen Feldstärke oder des Vektors der magnetischen Flussdichte zu messen, wobei die Koordinatenachsen insbesondere Achsen eines orthogonalen Koordinatensystems sind. Die kennzeichnende Kenngröße des Überlagerungsmagnetfelds kann somit beispielweise die magnetische Feldstärke, die magnetische Flussdichte oder die Ausrichtung des Überlagerungsmagnetfeldes sein. Der Magnetfeldsensor kann dazu ausgestaltet sein, die Änderung der kennzeichnenden Kenngröße über der Zeit zu ermitteln.

In einer möglichen Ausführungsform kann eine Auswerteeinheit vorgesehen sein, die ausgestaltet ist, aus der das Überlagerungsmagnetfeld kennzeichnenden Kenngröße den Schlupf der Kupplung zu ermitteln. Der Schlupf der Kupplung wird dabei durch die relative Drehzahldifferenz zwischen dem ersten Kupplungselement und dem zweiten Kupplungselement definiert.

Die Auswerteeinheit kann dazu ausgestaltet sein, in Abhängigkeit des ermittelten Schlupfes ein Signal zu erzeugen, das den Zustand der Kupplung charakterisiert. Der Zustand der Kupplung kann insbesondere durch einen oder mehrere Werte von der Relativdrehzahl zwischen dem ersten Kupplungselement und dem zweiten Kupplungselement, dem Schlupf zwischen dem ersten Kupplungselement und dem zweiten Kupplungselement, der Temperatur der Kupplung oder einzelner Kupplungselemente sowie dem Verschließ einzelner Kupplungselement beschrieben sein.

Die Auswerteeinheit kann mit einer externen Steuereinheit verbindbar sein. Die externe Steuereinheit kann beispielsweise die Steuereinheit einer Antriebsanordnung oder einer Abtriebsanordnung sein.

In einer möglichen Ausführungsform kann der Magnetfeldsensor zumindest zeitweise innerhalb des Überlagerungsmagnetfeldes angeordnet sein. Dies kann beispielsweise dann der Fall sein, wenn die Magnetfeldquelle relativ zu dem Magnetfeldsensor drehbar angeordnet ist. Das Überlagerungsmagnetfeld läuft in diesem Fall um eine Drehachse um und der Magnetfeldsensor durchläuft das Überlagerungsmagnetfeldes bei jeder Umdrehung.

In einer möglichen Ausführungsform kann der Magnetfeldsensor mit einem zu der Drehachse respektive der Kupplung ortsfesten Element befestigbar sein. Dies weist den Vorteil auf, dass eine einfache kabelgebunden Verbindung zu der Auswerteeinheit hergestellt werden kann. Alternativ ist es denkbar, dass der Magnetfeldsensor mit einem von dem ersten Kupplungselement und dem zweiten Kupplungselement verbindbar ist, wobei der Magnetfeldsensor im Grundzustand der Kupplung dauerhaft in dem Überlagerungsmagnetfeldes angeordnet ist. Der Grundzustand der Kupplung ist dabei der Zustand, in der das erste Kupplungselement und das zweite Kupplungselement bezüglich einer Ausgangsstellung nicht relativ zueinander verdreht sind. In dieser Ausgestaltung ist der Magnetfeldsensor drehend angeordnet und das Signal des Magnetfeldsensors muss dementsprechend von dem drehend Teil abgenommen werden. Dies ist beispielsweise durch einen Schleifkontakt oder eine Funkverbindung möglich.

In einer möglichen Ausführungsform kann die Magnetfeldquelle mit einem von dem ersten Kupplungselement und dem zweiten Kupplungselement verbindbar sein. Die Magnetfeldquelle kann insbesondere als separates Magnetelement ausgestaltet sein, beispielsweise als Ringmagnet oder als Stabmagnet. Alternativ kann die Magnetfeldquelle mit einem von dem ersten Kupplungselement und dem zweiten Kupplungselement integral ausgestaltet sein. Beispielsweise kann die Magnetfeldquelle ein magnetisierter Abschnitt des entsprechenden Kupplungselements sein.

In einer weiteren möglichen Ausführungsform kann das erste Magnetfeldbeeinflussungselement und/oder das zweite Magnetfeldbeeinflussungselement als eine weitere Magnetfeldquelle ausgestaltet sein. Die weitere Magnetfeldquelle kann insbesondere ein separates Magnetelement sein. Alternativ kann die weitere Magnetfeldquelle mit einem von dem ersten Kupplungselement und dem zweiten Kupplungselement integral ausgestaltet sein. Beispielsweise kann die weitere Magnetfeldquelle ein magnetisierter Abschnitt des entsprechenden Kupplungselements sein.

In einer möglichen Ausführungsform kann die Magnetfeldquelle und/oder die weitere Magnetfeldquelle ein Permanentmagnet oder ein Elektromagnet sein.

Zur Lösung der der Erfindung zugrunde liegenden Aufgabe wird ferner eine Kupplung, insbesondere für eine Gelenkwelle, vorgeschlagen, umfassend: ein erstes Kupplungselement, ein zweites Kupplungselement, das mit dem ersten Kupplungselement koppelbar ist, eine Sensoranordnung in einer zuvor beschrieben Ausführung, wobei das erste Magnetfeldbeeinflussungselement mit dem ersten Kupplungselement verbunden oder mit dem ersten Kupplungselement integral ausgestaltet ist, und das zweite Magnetfeldbeeinflussungselement mit dem zweiten Kupplungselement verbunden oder mit dem zweiten Kupplungselement integral ausgestaltet ist.

In einer möglichen Ausführungsform kann die Kupplung um eine Drehachse drehbar angeordnet sein. Das erste Kupplungselement und das zweite Kupplungselement können relativ zu dem Magnetfeldsensor um die Drehachse drehbar angeordnet sein.

In einer möglichen Ausführungsform der Kupplung kann der Magnetfeldsensor an einem zu der Drehachse respektive der Kupplung ortsfesten Element befestigt oder befestigbar sein. Alternativ kann der Magnetfeldsensor mit einem von dem ersten Kupplungselement und dem zweiten Kupplungselement fest verbunden sein.

In einer möglichen Ausführungsform der Kupplung kann der Magnetfeldsensor einen größeren Abstand von der Drehachse aufweisen als jeweils das erste Magnetfeldbeeinflussungselement und das zweite Magnetfeldbeeinflussungselement. Alternativ oder in Kombination kann der Magnetfeldsensor außerhalb einer zu der Drehachse koaxialen zylindrischen Einhüllenden jeweils des ersten Kupplungselements und des zweiten Kupplungselements angeordnet sein.

In einer möglichen Ausführungsform der Kupplung kann die Magnetfeldquelle mit einem von dem ersten Kupplungselement und dem zweiten Kupplungselement verbunden oder integral ausgestaltet sein. Das erste Magnetfeldbeeinflussungselement und/oder das zweite Magnetfeldbeeinflussungselement kann als eine weitere Magnetfeldquelle ausgestaltet sein. Die weitere Magnetfeldquelle kann mit einem von dem ersten Kupplungselement und dem zweiten Kupplungselement verbunden oder integral ausgestaltet sein .

In einer möglichen Ausführungsform kann die Kupplung ein Schutzelement umfassen, das zumindest abschnittsweise um das erste Kupplungselement und/oder das zweite Kupplungselement angeordnet ist, wobei der Magnetfeldsensor an dem Schutzelement befestigt ist. So kann der Magnetfeldsensor beispielsweise an dem Schutztopf einer Gelenkwelle befestigt sein.

Zur Lösung der der Erfindung zugrunde liegenden Aufgabe wird des Weiteren eine Gelenkwellenanordnung vorgeschlagen, umfassend: ein drehbar angeordnetes Gelenkwellenelement, und eine Kupplung in einer zuvor beschriebenen Ausführungsform, wobei das Gelenkwellenelement mit dem ersten Kupplungselement verbunden ist.

Nachfolgend werden mögliche Ausführungsformen der Erfindung anhand der Figurenzeichnungen erläutert. Hierin zeigt:
- Figur 1: eine Ansicht eines Traktors, der über eine Gelenkwellenanordnung mit einem Arbeitsgerät verbunden ist,
- Figur 2: eine schematische Schnittansicht durch die Gelenkwellenanordnung aus Figur 1 im Bereich der Anbindung an das Arbeitsgerät,
- Figur 3: ein Schnittansicht der Kupplung aus Figur 1,
- Figur 4: ein Schnittansicht der Kupplung aus Figur 1 in einer zweiten Ausführungsform,
- Figur 5: ein Schnittansicht der Kupplung aus Figur 1 in einer dritten Ausführungsform, und
- Figur 6: ein Schnittansicht der Kupplung aus Figur 1 in einer vierten Ausführungsform.

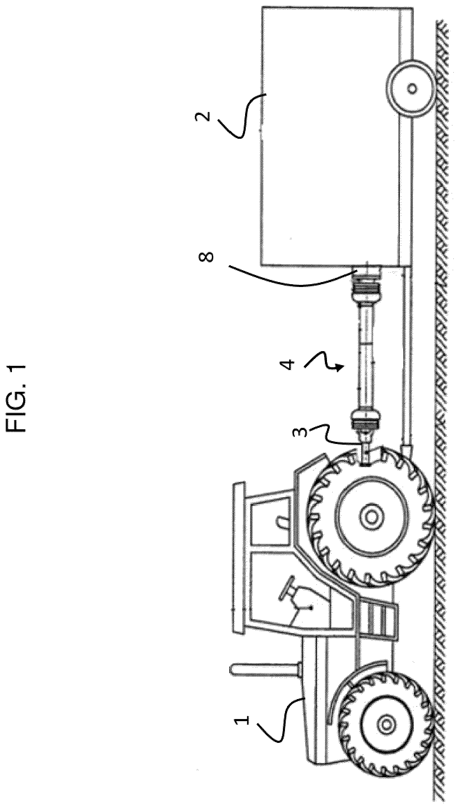

Figur 1 zeigt einen Traktor 1 mit einem angehängten Arbeitsgerät 2. Das Arbeitsgerät 2 ist mittels einer Gelenkwellenanordnung 4 von der Zapfwelle 3 des Traktors 1 angetrieben. Hierzu ist die Gelenkwellenanordnung 4 auf die Zapfwelle 3 aufgesteckt und mit dieser drehfest verbunden. Geräteseitig ist die Gelenkwellenanordnung 4 ebenfalls mit einem Antriebselement eines Getriebes 8 des Arbeitsgeräts 2 antriebsverbunden.

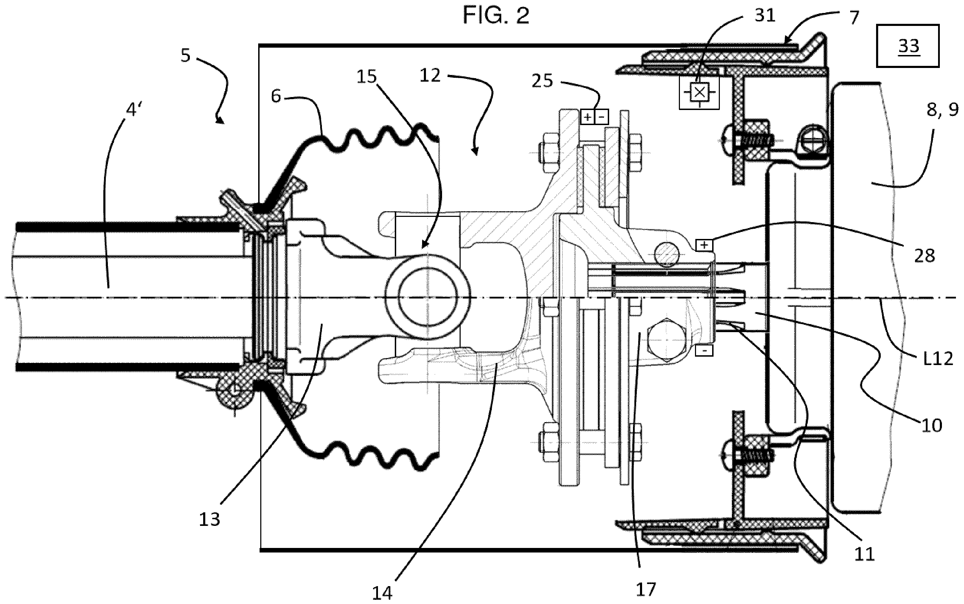

Figur 2 zeigt die Gelenkwellenanordnung 4, in einer schematischen Übersichtsskizze. Die Gelenkwellenanordnung 4 umfasst eine Wellengabel 13 und eine Kupplungsgabel 14, die über eine Kreuzgarnitur 15 in bekannter Weise kardanisch miteinander verbunden sind. Die Wellengabel 13 und die Kupplungsgabel 14 weisen jeweils Durchbrüche in Gabelabschnitten auf, in denen die Kreuzgarnitur 15 eingesetzt ist. Die Wellengabel 13 ist mit einer Welle 4' der Gelenkwellenanordnung 4 drehfest verbunden. Die Kupplungsgabel 14 ist über eine Kupplung 12 antriebsmäßig mit einer Eingangswelle 10 des Getriebes 8 lösbar verbunden. Die Kupplung 12 ist drehbar um eine Drehachse L12 angeordnet.

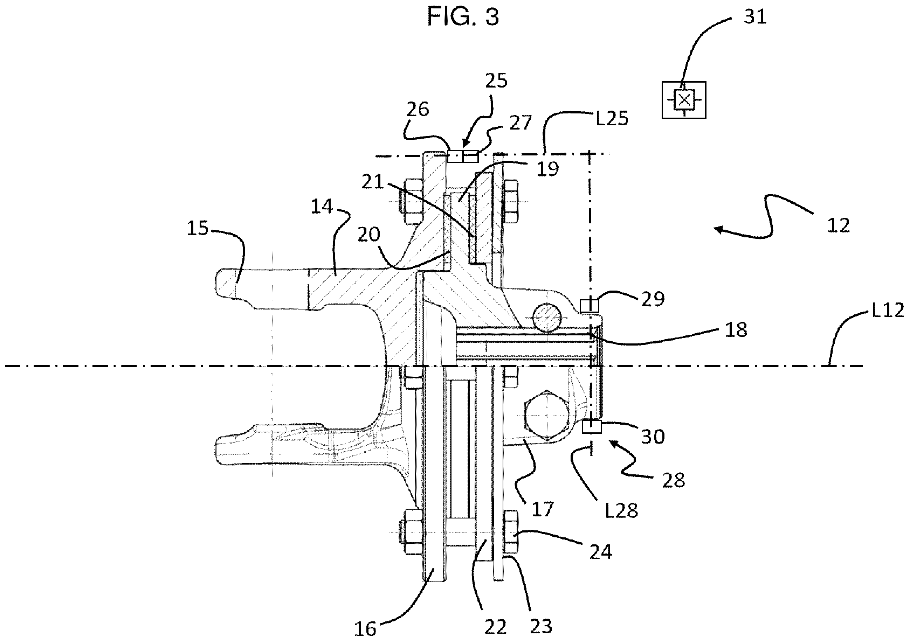

Wie aus der Zusammenschau der Figuren 2 und 3 erkennbar ist, weist die Kupplung 12 ein erstes Kupplungselement und ein zweites Kupplungselement auf, die so miteinander gekoppelt sind, dass beim Überschreiten eines maximalen Drehmoments eine relative Drehbewegung der beiden Kupplungselemente zueinander erfolgen kann.

Das erste Kupplungselement ist als Kupplungsflansch 16 ausgestaltet, in den die Kupplungsgabel 14 integriert ist. Das zweite Kupplungselement ist als Abtriebselement 17 ausgebildet. Das Abtriebselement 17 umfasst eine Innenkeilverzahnung 18, in die eine komplementäre Außenkeilverzahnung 11 der Eingangswelle 10 des Getriebes 8 eingesteckt ist. Das Abtriebselement 17 und die Eingangswelle 10 des Getriebes 8 sind somit drehfest miteinander verbunden.

Das Abtriebselement 17 weist einen Reibflansch 19 auf, der zumindest mittelbar reibschlüssig mit dem Kupplungsflansch 16 verbunden ist. Hierzu umfasst die Kupplung 12 zudem eine erste Reiblamelle 20, eine zweite Reiblamelle 21, einen Druckring 22 und einen Federring 23.

Die erste Reiblamelle 20 ist zwischen dem Kupplungsflansch 16 und dem Reibflansch 19 des Abtriebselements 17 angeordnet respektive eingespannt. Die erste Reiblamelle 20 ist somit auf einer ersten axialen Seite des Reibflansches 19 mit diesem in Anlage. Es ist auch denkbar, dass die erste Reiblamelle 20 mit dem Kupplungsflansch 16 fest verbunden ist.

Auf einer zweiten axialen Seite des Reibflansches 19 ist die zweite Reiblamelle 21 mit dem Reibflansch 19 in Anlage. Der Reibflansch 19 ist somit zwischen der ersten Reiblamelle 20 und der zweiten Reiblamelle 21 eingespannt und wird reibschlüssig in Umfangsrichtung von diesen gehalten. Die zweite Reiblamelle 21 ist zwischen dem Reibflansch 19 und dem Druckring 22 angeordnet respektive zwischen diesen eingespannt. Es ist auch denkbar, dass die zweite Reiblamelle 21 mit dem Druckring 22 fest verbunden ist. Der Druckring 22 ist zwischen der zweiten Reiblamelle 21 und dem Federring 23 angeordnet respektive eingespannt. Es ist auch denkbar, dass der Druckring 22 mit dem Federring 23 fest verbunden ist.

Der Federring 23 beaufschlagt in axialer Richtung den Druckring 22, die zweite Reiblamelle 21, den Reibflansch 19, die erste Reiblamelle 20, und den Kupplungsflansch 16 mit einer Druckkraft, sodass die genannten Elemente miteinander verspannt sind. Hierzu erstrecken sich ein oder mehrere Spannmittel 24 durch einen Durchbruch des Federrings 23 und durch einen Durchbruch in dem Kupplungsflansch 16. Im vorliegenden Fall sind die Spannmittel 24 als Schraube ausgeführt, die durch eine Mutter gesichert sind. Durch Festdrehen der Mutter wird die Verspannkraft in die Schraube eingeleitet. Die Spannmittel 24 sind dabei so angeordnet, dass eine Drehbewegung des Reibflansches 19 um die Drehachse L12 zumindest in einem Umfangsabschnitt erfolgen kann, ohne dass der Reibflansch 19 in Anlage mit den Spannmitteln 24 kommt.

Die Kupplung 12 weist einen ersten Magneten 25 als Magnetfeldquelle 25 auf, der im vorliegenden Fall an dem Kupplungsflansch 16 befestigt ist. Der erste Magnet 25 kann dabei in eine Ausnehmung des Kupplungsflansches 16 eingesetzt sein oder mit dem Kupplungsflansch 16 verklebt sein. Alternativ kann der erste Magnet 25 in den Kupplungsflansch 16 eingegossen sein. Es ist auch denkbar, dass der erste Magnet 25 in den Kupplungsflansch 16 integriert ist. Beispielweise kann ein äußerer Umfangsabschnitt des Kupplungsflansches 16 magnetisiert sein und den ersten Magneten bilden. Der erste Magnet 25 könnte grundsätzlich aber auch an einem der Elemente erste Reiblamelle 20, zweite Reiblamelle 21, Druckring 22 und Federring 23 befestigt oder darin integriert sein.

Der erste Magnet 25 umfasst einen Nordpol 26 und einen Südpol 27. Der erste Magnet 25 ist als Stabmagnet ausgeführt, wobei die gedachte gerade Verbindung des Nordpols 26 und des Südpols 27 eine Längsachse L25 des ersten Magneten 25 definiert. Die Längsachse L25 ist parallel zu der Drehachse L12 angeordnet.

In der dargestellten Ausführungsform stellt der erste Magnet 25 eine Magnetfeldquelle einer Sensoranordnung dar, die dazu ausgestaltet ist, den Schlupf respektive eine Relativdrehzahl zwischen dem Kupplungsflansch 16 und dem Abtriebselement 17 zu ermitteln. Die Magnetfeldquelle respektive der erste Magnet 25 erzeugen ein Ausgangsmagnetfeld der Sensoranordnung.

Das erste Kupplungselement respektive der Kupplungsflansch 16 weist zumindest abschnittsweise ferromagnetische Eigenschaften auf, sodass die Feldlinien des Ausgangsmagnetfeldes der Magnetfeldquelle durch den Kupplungsflansch 16 beeinflusst respektive geführt werden. Die ferromagnetischen Abschnitte des Kupplungsflansches 16 stellen somit ein erstes Magnetfeldbeeinflussungselement der Sensoranordnung dar.

An dem Abtriebselement 17 ist ein zweiter Magnet 28 als zweites Magnetbeeinflussungselement 28 befestigt. Der zweite Magnet 28 ist als Ringmagnet ausgestaltet, der auf einer Außenumfangsfläche des Abtriebselements 17 angeordnet ist. Der zweite Magnet 28 ist beispielweise mit dem Abtriebselement 17 verklebt oder verschraubt. Alternativ kann der zweite Magnet 28 in das Abtriebselement 17 eingegossen sein. Es ist auch denkbar, dass der zweite Magnet 28 in das Abtriebselement 17 integriert ist. Beispielweise kann ein äußerer Umfangsabschnitt des Abtriebselements 17 magnetisiert sein und den zweiten Magneten bilden.

Der zweite Magnet 28 umfasst einen Nordpol 29 und einen Südpol 30, wobei die gedachte gerade Verbindung des Nordpols 29 und des Südpols 30 eine Längsachse L28 des zweiten Magneten 28 definiert. Die Längsachse L28 ist in einer Radialebene bezüglich der Drehachse L12 angeordnet. In den Figuren 2 und 3 ist die Kupplung 12 in einer Ausgangsstellung dargestellt, in der der Kupplungsflansch 16 und das Abtriebselement 17 unverdreht zueinander in einer jeweiligen Montageposition angeordnet sind, um die Funktionsweise der Sensoranordnung beispielhaft zu erklären. Es versteht sich, dass die Funktion der Sensoranordnung nicht auf diese Ausgangsstellung beschränkt ist. In der Ausgangsstellung schneiden sich die Längsachse L25 des ersten Magneten 25 und die Längsachse L28 des zweiten Magneten 28 in einem Schnittpunkt. Der Südpol 27 des ersten Magneten 25 und der Nordpol 29 des zweiten Magneten 28 sind in der Ausgangsstellung dem Schnittpunkt zugewandt. Es sind somit gegengleiche Pole des ersten Magneten 25 und des zweiten Magneten 28 dem Schnittpunkt zugewandt. In einer anderen möglichen Ausgestaltung können jeweils die gleichen Pole des ersten Magneten 25 und des zweiten Magneten 28 dem Schnittpunkt zugewandt sein.

Das Magnetfeld des zweiten Magneten 28 verändert den Verlauf der Feldlinien des Ausgangsmagnetfeldes der Magnetfeldquelle respektive des ersten Magneten 25. Der zweite Magnet 28 stellt somit ein zweites Magnetfeldbeeinflussungselement der Sensoranordnung dar.

Der erste Magnet 25, der Kupplungsflansch 16 als erstes Magnetfeldbeeinflussungselement und der zweite Magnet 28 als zweites Magnetfeldbeeinflussungselement sind so zueinander angeordnet, dass das Ausgangsmagnetfeld in ein Überlagerungsmagnetfeld überführt wird.

Ferner ist in Figur 2 die Positionierung eines Magentfeldsensors 31 dargestellt, der ausgestaltet ist, eine das Überlagerungsmagnetfeld kennzeichnende Kenngröße zu messen. Die Kenngröße kann beispielsweise der magnetische Fluss, die magnetische Dichte oder die Ausrichtung des Überlagerungsmagnetfeldes im Messpunkt des Magnetfeldsensors 31 sein.

Die Gelenkwellenanordnung 4 umfasst eine Schutzvorrichtung 5, die einen Schutztrichter 6 und einen Schutztopf 7 aufweist. Der Schutztrichter 6 umgibt das Kardangelenk mit der Wellengabel 13, der Kupplungsgabel 14 und der Kreuzgarnitur 15 zumindest abschnittsweise und ist innerhalb des Schutztopfes 7 angeordnet. Der Schutztopf 7 ist fest mit einem Gehäuse 9 des Getriebes 8 verbunden und erstreckt sich entlang der Drehachse L12, sodass der Schutztopf 7 und die Kupplung 12 in axialer Überdeckung zueinander angeordnet sind.

Der Magnetfeldsensor 31 ist an einem ortsfesten Bauteil befestigt, das sich insbesondere nicht mit der Kupplung 12 um die Drehachse L12 dreht. Wie sich aus Figur 2 erkennen lässt, ist der Magnetfeldsensor 31 konkret getriebeseitig an dem Schutztopf 7 befestigt. Es ist allerdings auch denkbar, dass der Magnetfeldsensor 31 an einer beliebigen Stelle des Schutztopfes 7 befestigt ist. Beispielweise kann der Magnetfeldsensor 31 so an dem Schutztopf 7 befestigt sein, dass der Magnetfeldsensor 31 zumindest abschnittsweise in einer Radialebene mit dem ersten Magneten 25 und/oder in einer Radialebene mit dem zweiten Magneten 28 angeordnet ist. Alternativ kann der Magnetfeldsensor 31 auch direkt an dem Gehäuse 9 des Getriebes 8 befestigt sein.

Im vorliegenden Fall ist der Magnetfeldsensor 31 dazu ausgestaltet, die Ausrichtung des Überlagerungsmagnetfeldes in dem Messpunkt des Magnetfeldsensor 31 zu messen. Hierzu erfasst der Magnetfeldsensor 31 zumindest eine Koordinate eines Vektors der magnetischen Feldstärke oder eines Vektors der magnetischen Flussdichte des Überlagerungsmagnetfeldes in einem orthogonalen Koordinatensystem. Das Koordinatensystem wird dabei durch die Drehachse L12 sowie die kürzeste Verbindung des Messpunktes mit der Drehachse L12 definiert. Im vorliegenden Fall wird durch den Magnetfeldsensor 31 eine Koordinate erfasst, die bezüglich der Drehachse L12 in die radiale Richtung gerichtet ist. Es versteht sich, dass alternativ auch ein Magnetfeldsensor 31 verwendet werden kann, der zwei oder drei Koordinaten des Vektors misst.

Zu Auswertung des Signals des Magnetfeldsensors 31 ist dieser mit einer Auswerteeinheit 33 verbunden. Im vorliegenden Fall erfolgt die Verbindung zwischen Magnetfeldsensors 31 und Auswerteeinheit 33 kabelgebunden. Es ist aber auch denkbar, dass die Verbindung kabellos ausgestaltet ist.

Die Auswerteeinheit 33 ist ausgestaltet, aus der das Überlagerungsmagnetfeld kennzeichnenden Kenngröße einen Zustand der Kupplung zu ermitteln. Die Auswerteeinheit 33 ist ferner dazu ausgestaltet, in Abhängigkeit des ermittelten Zustandes ein Signal zu erzeugen, das den Zustand der Kupplung charakterisiert. Die Auswerteeinheit 33 ist zudem mit einer Steuereinheit des Traktors 1 verbindbar bzw. verbunden. Somit kann die Steuereinheit des Traktors 1 die über die Zapfwelle 3 der Gelenkwellenanordnung 4 zugeführte Leistung in Abhängigkeit des von der Auswerteeinheit 33 übertragenen Signals steuern.

Wird die Kupplung 12 mit einem Drehmoment beaufschlagt, das einen Schwellwert übersteigt, rutscht der Reibflansch 19 zwischen der ersten Reiblamelle 20 und der zweiten Reiblamelle 21 in Umfangsrichtung durch. Der erste Magnet 25 und der zweite Magnet 28 werden somit im Umfangsrichtung relativ zueinander verschoben respektive verdreht. Die Längsachse L25 des ersten Magneten 25 und die Längsachse L28 des zweiten Magneten 28 sind nachfolgend phasenversetzt zueinander angeordnet. Zudem haben sich die ferromagnetischen Abschnitte des Kupplungsflansches 16 respektive das erste Magnetfeldbeeinflussungselement zu dem zweiten Magneten 28 respektive zu dem zweiten Magnetfeldbeeinflussungselement um die Längsachse L12 verdreht. Hierdurch wird jeweils die Ausrichtung und lokale Intensität des Überlagerungsmagnetfeldes geändert. Diese Änderung kann in dem Messpunkt durch den Magnetfeldsensor 31 erfasst und so eine Relativdrehzahl oder ein Schlupf zwischen dem ersten Kupplungselement 16 und dem zweiten Kupplungselement 17 detektiert werden. Das Überlagerungsmagnetfeld rotiert mit der Kupplung 12 um die Drehachse L12. Somit durchläuft der Magnetfeldsensor 31 das Überlagerungsmagnetfeld je Umdrehung einmal. Der Magnetfeldsensor und/oder die Auswerteeinheit 33 können die Änderung des Überlagerungsmagnetfeldes je Umlauf erfassen.

Der erste Magnet 25, der Kupplungsflansch 16, der zweite Magnet 28 und der Magnetfeldsensor 31 sind somit Teil einer Sensoranordnung zur Schlupferkennung der Kupplung 12. Die Sensoranordnung umfasst genau einen Magnetfeldsensor. Dies ist ausreichend, um den Schlupf der Kupplung zu ermitteln. Es ist allerdings auch denkbar, dass die Sensoranordnung mehrere Magnetfeldsensoren aufweist, die jeweils ausgestaltet sind, eine das Überlagerungsmagnetfeld kennzeichnende Kenngröße zu messen. Somit kann die Sensoranordnung redundant abgesichert werden oder die Auflösung der Sensoranordnung erhöht werden.

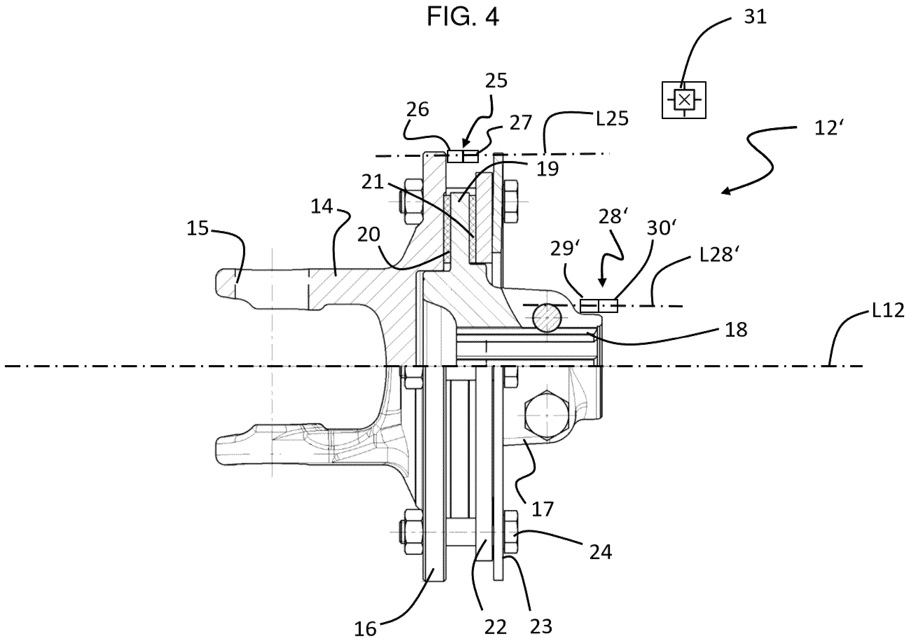

Die Figur 4 zeigt eine Kupplung 12' in einer zweiten Ausführungsform. Die zweite Ausführungsform der Kupplung 12' unterscheidet sich von der ersten Ausführungsform 12 nur durch die Anordnung der Sensoranordnung, wobei der Aufbau der restlichen Kupplung identisch ist. Insofern werden gleiche oder ähnliche Teile mit den gleichen Bezugszeichen gekennzeichnet und diesbezüglich auf die Beschreibung im Kontext der ersten Ausführungsform verwiesen.

Die Sensoranordnung der zweiten Ausführungsform umfasst ebenfalls den ersten Magneten 25 und den Magnetfeldsensor 31, wobei ein geänderter zweiter Magnet 28' vorgesehen ist. Der zweite Magnet 28' ist anstatt als Ringmagnet als Stabmagnet ausgestaltet und mit dem Abtriebselement 17 der Kupplung 12' fest verbunden. Der zweite Magnet 28' läuft somit auch mit der Kupplung 12' um die Drehachse L12 um.

Der zweite Magnet 28' umfasst einen Nordpol 29' und einen Südpol 30', wobei die gedachte gerade Verbindung des Nordpols 29' und des Südpols 30' eine Längsachse L28` des zweiten Magneten 28 definiert. Die Längsachse L28` ist parallel zu der Drehachse L12 und zu der Längsachse L25 des ersten Magneten 25 angeordnet.

In der Figur 4 ist die Kupplung 12' in einer Ausgangsstellung dargestellt, in der der Kupplungsflansch 16 und das Abtriebselement 17 unverdreht zueinander in einer jeweiligen Montageposition angeordnet sind, um die Funktionsweise der Sensoranordnung beispielhaft zu erklären. Es versteht sich, dass die Funktion der Sensoranordnung nicht auf diese Ausgangsstellung beschränkt ist. Die Längsachse L25 des ersten Magneten 25, die Längsachse L28' des zweiten Magneten 28' und die Drehachse L12 sind in der Ausgangsstellung in einer gemeinsamen Ebene angeordnet.

Wird die Kupplung 12' mit einem Drehmoment beaufschlagt, das einen Schwellwert übersteigt, rutscht der Reibflansch 19 zwischen der ersten Reiblamelle 20 und der zweiten Reiblamelle 21 in Umfangsrichtung durch. Der erste Magnet 25 und der zweite Magnet 28 werden somit im Umfangsrichtung relativ zueinander verschoben respektive beabstandet. Die Längsachse L25 des ersten Magneten 25, die Längsachse L28' des zweiten Magneten 28' und die Drehachse L12 sind nachfolgend nicht mehr in einer gemeinsamen Ebene angeordnet. Zudem haben sich die ferromagnetischen Abschnitte des Kupplungsflansches 16 respektive das erste Magnetfeldbeeinflussungselement zu dem zweiten Magneten 28' respektive zu dem zweiten Magnetfeldbeeinflussungselement um die Längsachse L12 verdreht. Hierdurch wird jeweils die Ausrichtung und lokale Intensität des Überlagerungsmagnetfeldes geändert. Diese Änderung kann in dem Messpunkt durch den Magnetfeldsensor 31 erfasst werden.

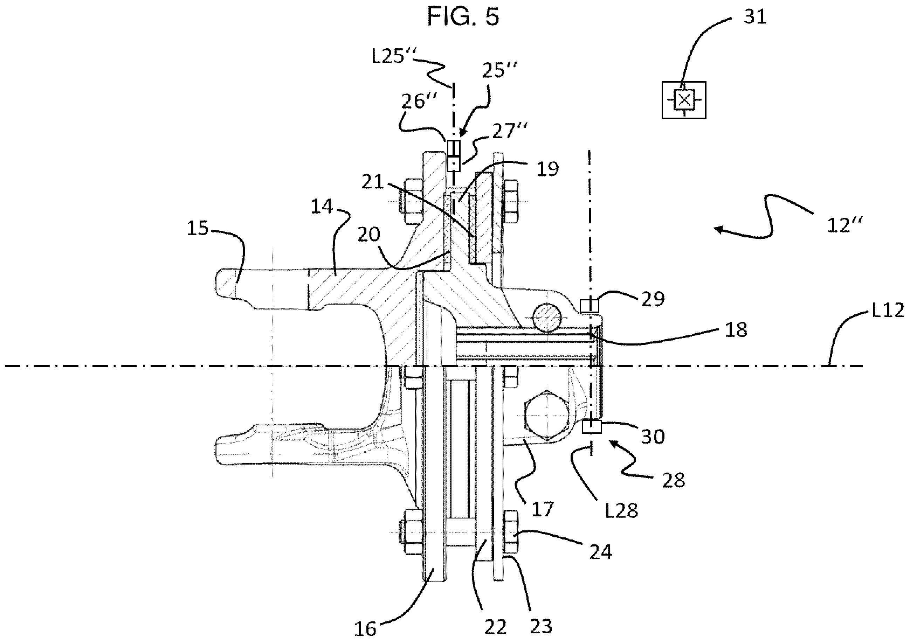

Die Figur 5 zeigt eine Kupplung 12" in einer dritten Ausführungsform. Die dritte Ausführungsform der Kupplung 12" unterscheidet sich von der ersten Ausführungsform 12 nur durch die Anordnung der Sensoranordnung, wobei der Aufbau der restlichen Kupplung identisch ist. Insofern werden gleiche oder ähnliche Teile mit den gleichen Bezugszeichen gekennzeichnet und diesbezüglich auf die Beschreibung im Kontext der ersten Ausführungsform verwiesen.

Die Sensoranordnung der dritten Ausführungsform umfasst ebenfalls den zweiten Magneten 28 und den Magnetfeldsensor 31, wobei ein geänderter erster Magnet 25" vorgesehen ist. Der erste Magnet 25" ist als Stabmagnet ausgestaltet und mit dem Kupplungsflansch 16 der Kupplung 12" fest verbunden.

Der erste Magnet 25" umfasst einen Nordpol 26" und einen Südpol 27", wobei die gedachte gerade Verbindung des Nordpols 26" und des Südpols 27" eine Längsachse L25" des ersten Magneten 25" definiert. Die Längsachse L25" ist senkrecht zu der Drehachse L12 und parallel zu der Längsachse L28 des zweiten Magneten 28 angeordnet.

In der Figur 5 ist die Kupplung 12" in einer Ausgangsstellung dargestellt, in der der Kupplungsflansch 16 und das Abtriebselement 17 unverdreht zueinander in einer jeweiligen Montageposition angeordnet sind, um die Funktionsweise der Sensoranordnung beispielhaft zu erklären. Es versteht sich, dass die Funktion der Sensoranordnung nicht auf diese Ausgangsstellung beschränkt ist. Die Längsachse L25" des ersten Magneten 25 und die Längsachse L28 des zweiten Magneten 28 sind in einer gemeinsamen Ebene mit der Drehachse L12 und in parallelen Radialebenen angeordnet, die axial voneinander beabstandet sind.

Wird die Kupplung 12" mit einem Drehmoment beaufschlagt, das einen Schwellwert übersteigt, rutscht der Reibflansch 19 zwischen der ersten Reiblamelle 20 und der zweiten Reiblamelle 21 in Umfangsrichtung durch. Der erste Magnet 25" und der zweite Magnet 28 werden somit im Umfangsrichtung relativ zueinander verschoben respektive verdreht. Die Längsachse L25" des ersten Magneten 25", die Längsachse L28 des zweiten Magneten 28 und die Drehachse L12 sind nachfolgend nicht mehr in einer gemeinsamen Ebene angeordnet. Zudem haben sich die ferromagnetischen Abschnitte des Kupplungsflansches 16 respektive das erste Magnetfeldbeeinflussungselement zu dem zweiten Magneten 28 respektive zu dem zweiten Magnetfeldbeeinflussungselement um die Längsachse L12 verdreht. Hierdurch wird jeweils die Ausrichtung und lokale Intensität des Überlagerungsmagnetfeldes geändert. Diese Änderung kann in dem Messpunkt durch den Magnetfeldsensor 31 erfasst werden.

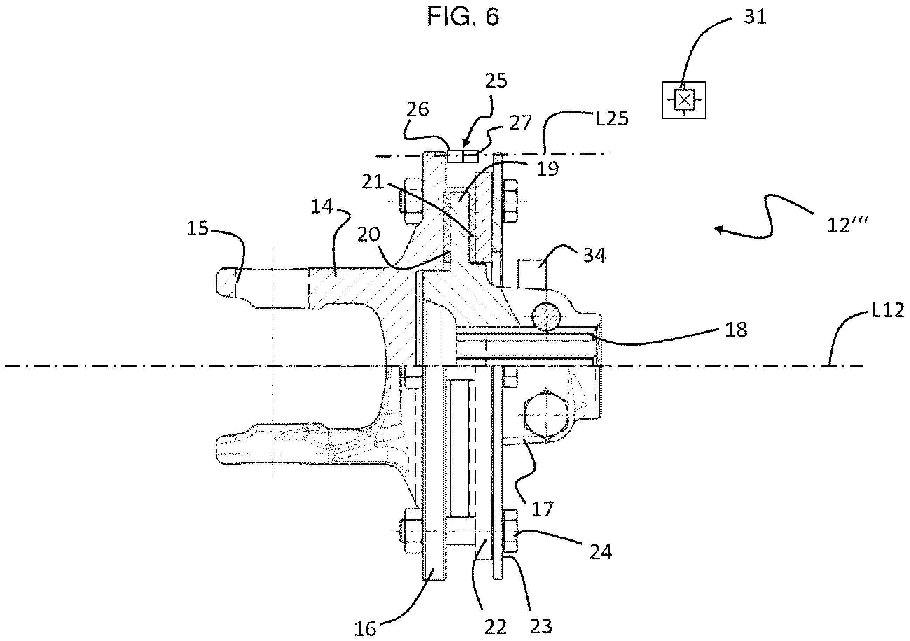

Figur 6 zeigt eine Kupplung 12‴ in einer vierten Ausführungsform. Die vierte Ausführungsform der Kupplung 12‴ unterscheidet sich von der ersten Ausführungsform 12 nur durch die Anordnung der Sensoranordnung, wobei der Aufbau der restlichen Kupplung identisch ist. Insofern werden gleiche oder ähnliche Teile mit den gleichen Bezugszeichen gekennzeichnet und diesbezüglich auf die Beschreibung im Kontext der ersten Ausführungsform verwiesen.

Die Sensoranordnung der vierten Ausführungsform umfasst ebenfalls den ersten Magneten 25 und den Magnetfeldsensor 31, wobei auf den zweiten Magnet 28 als zweites Magnetfeldbeeinflussungselement verzichtet wird. Stattdessen umfasst das Abtriebselement 17 einen ferromagnetischen Abschnitt als zweites Magnetfeldbeeinflussungselement 34. Der ferromagnetische Abschnitt kann gegenüber der dem restlichen Abtriebselement 17 eine erhöhte magnetische Permeabilität aufweisen. Der ferromagnetische Abschnitt kann entweder in das Abtriebselement 17 integriert sein oder mit diesen verbunden sein. Der ferromagnetische Abschnitt als zweites Magnetfeldbeeinflussungselement 34 läuft somit auch mit der Kupplung 12‴ um die Drehachse L12 um.

In Figur 6 ist die Kupplung 12‴ in einer Ausgangsstellung dargestellt, in der der Kupplungsflansch 16 und das Abtriebselement 17 unverdreht zueinander in einer jeweiligen Montageposition angeordnet sind, um die Funktionsweise der Sensoranordnung beispielhaft zu erklären. Es versteht sich, dass die Funktion der Sensoranordnung nicht auf diese Ausgangsstellung beschränkt ist. Die Längsachse L25 des ersten Magneten 25, der ferromagnetische Abschnitt als zweites Magnetfeldbeeinflussungselement 34 und die Drehachse L12 sind in der Ausgangsstellung in einer gemeinsamen Längsebene angeordnet.

Wird die Kupplung 12‴ mit einem Drehmoment beaufschlagt, das einen Schwellwert übersteigt, rutscht der Reibflansch 19 zwischen der ersten Reiblamelle 20 und der zweiten Reiblamelle 21 in Umfangsrichtung durch. Der erste Magnet 25 und der ferromagnetische Abschnitt als zweites Magnetfeldbeeinflussungselement 34 werden somit im Umfangsrichtung relativ zueinander verschoben respektive beabstandet. Die Längsachse L25 des ersten Magneten 25, der ferromagnetische Abschnitt und die Drehachse L12 sind nachfolgend nicht mehr in einer gemeinsamen Ebene angeordnet. Zudem haben sich die ferromagnetischen Abschnitte des Kupplungsflansches 16 respektive das erste Magnetfeldbeeinflussungselement zu dem ferromagnetischen Abschnitt respektive zu dem zweiten Magnetfeldbeeinflussungselement um die Längsachse L12 verdreht. Hierdurch wird jeweils die Ausrichtung und lokale Intensität des Überlagerungsmagnetfeldes geändert. Diese Änderung kann in dem Messpunkt durch den Magnetfeldsensor 31 erfasst werden.

### Bezugszeichenliste

- 1: Traktor
- 2: Arbeitsgerät
- 3: Zapfwelle
- 4: Gelenkwelle
- 5: Schutzvorrichtung
- 6: Schutztrichter
- 7: Schutztopf
- 8: Getriebe
- 9: Ortsfestes Element, Gehäuse des Getriebes
- 10: Eingangswelle
- 11: Außenkeilverzahnung
- 12: Kupplung
- 13: Wellengabel
- 14: Kupplungsgabel
- 15: Kreuzgarnitur
- 16: Kupplungsflansch
- 17: Abtriebselement
- 18: Innenkeilverzahnung
- 19: Reibflansch
- 20: Reiblamelle
- 21: Reiblamelle
- 22: Druckring
- 23: Federring
- 24: Spannmittel
- 25: Magnetfeldquelle, erster Magnet
- 26: Nordpol
- 27: Südpol
- 28: Zweiter Magnet
- 29: Nordpol
- 30: Südpol
- 31: Magnetfeldsensor
- 33: Auswerteeinheit
- 34: Zweites Magnetfeldbeeinflussungselement
- L: Achse

## Patentansprüche

1. Sensoranordnung zur Schlupferkennung zwischen einem ersten Kupplungselement und einem zweiten Kupplungselement einer Kupplung, insbesondere einer Überlastkupplung, umfassend:
eine Magnetfeldquelle (25), die ein erstes Ausgangsmagnetfeld erzeugt,
ein erstes Magnetfeldbeeinflussungselement, das mit dem ersten Kupplungselement (16) verbindbar ist oder mit dem ersten Kupplungselement (16) integral ausgestaltet ist,
ein zweites Magnetfeldbeeinflussungselement (28, 34), das mit dem zweiten Kupplungselement (17) verbindbar ist oder mit dem zweiten Kupplungselement (17) integral ausgestaltet ist,
wobei die Magnetfeldquelle (25), das erste Magnetfeldbeeinflussungselement und das zweite Magnetfeldbeeinflussungselement (28, 34) so zueinander angeordnet sind, dass das Ausgangsmagnetfeld der Magnetfeldquelle von dem ersten Magnetfeldbeeinflussungselement und von dem zweiten Magnetfeldbeeinflussungselement (28, 34) in ein Überlagerungsmagnetfeld überführt wird, und
einen Magnetfeldsensor (31), der ausgestaltet ist, eine das Überlagerungsmagnetfeld kennzeichnende Kenngröße zu messen.

2. Sensoranordnung nach Anspruch 1,
**dadurch gekennzeichnet,**
**dass** der Magnetfeldsensor (31) dazu ausgestaltet ist, an einem Messpunkt die das Überlagerungsmagnetfeld kennzeichnende Kenngröße zu messen.

3. Sensoranordnung nach einem der Ansprüche 1 oder 2,
**dadurch gekennzeichnet,**
**dass** eine Auswerteeinheit (33) vorgesehen ist, die ausgestaltet ist, aus der das Überlagerungsmagnetfeld kennzeichnenden Kenngröße den Schlupf der Kupplung (12) zu ermitteln.

4. Sensoranordnung nach Anspruch 3,
**dadurch gekennzeichnet,**
**dass** die Auswerteeinheit (33) ausgestaltet ist, in Abhängigkeit des ermittelten Schlupfes ein Signal zu erzeugen, das den Zustand der Kupplung (12) charakterisiert.

5. Sensoranordnung nach einem der Ansprüche 3 oder 4,
**dadurch gekennzeichnet,**
**dass** die Auswerteeinheit (33) mit einer externen Steuereinheit verbindbar ist.

6. Sensoranordnung nach einem der Ansprüche 1 bis 5,
**dadurch gekennzeichnet,**
**dass** der Magnetfeldsensor (31) zumindest zeitweise innerhalb des Überlagerungsmagnetfeldes angeordnet ist.

7. Sensoranordnung nach einem der Ansprüche 1 bis 6,
**dadurch gekennzeichnet,**
**dass** die Magnetfeldquelle (25) mit einem von dem ersten Kupplungselement (16) und dem zweiten Kupplungselement (17) verbindbar ist,
wobei die Magnetfeldquelle (25) insbesondere als separates Magnetelement ausgestaltet ist.

8. Sensoranordnung nach Anspruch 7,
**dadurch gekennzeichnet,**
**dass** das erste Magnetfeldbeeinflussungselement und/oder das zweite Magnetfeldbeeinflussungselement (28, 34) als eine weitere Magnetfeldquelle ausgestaltet ist, wobei die weitere Magnetfeldquelle insbesondere ein separates Magnetelement ist.

9. Sensoranordnung nach Anspruch 8,
**dadurch gekennzeichnet,**
**dass** die Magnetfeldquelle (25) und/oder die weitere Magnetfeldquelle ein Permanentmagnet oder ein Elektromagnet ist.

10. Kupplung, insbesondere für eine Gelenkwelle, umfassend:
ein erstes Kupplungselement (16),
ein zweites Kupplungselement (17), das mit dem ersten Kupplungselement (16) koppelbar ist, und
eine Sensoranordnung nach einem der Ansprüche 1 bis 9,
wobei das erste Magnetfeldbeeinflussungselement mit dem ersten Kupplungselement (16) verbunden oder mit dem ersten Kupplungselement (16) integral ausgestaltet ist, und
das zweite Magnetfeldbeeinflussungselement (28, 34) mit dem zweiten Kupplungselement (17) verbunden oder mit dem zweiten Kupplungselement (17) integral ausgestaltet ist.

11. Kupplung nach Anspruch 10,
**dadurch gekennzeichnet,**
**dass** die Kupplung (12) um eine Drehachse (L12) drehbar angeordnet ist, dass das erste Kupplungselement (16) und das zweite Kupplungselement (17) relativ zu dem Magnetfeldsensor (31) drehbar angeordnet sind, und/oder dass der Magnetfeldsensor (31) an einem ortsfesten Element (8, 9) befestigt ist, insbesondere an einem bezüglich der Drehachse (L12) ortsfesten Element (8, 9).

12. Kupplung nach Anspruch 11,
**dadurch gekennzeichnet,**
**dass** der Magnetfeldsensor (31) einen größeren Abstand von der Drehachse (L12) aufweist als das erste Magnetfeldbeeinflussungselement und das zweite Magnetfeldbeeinflussungselement (28, 34),
und/oder
**dass** der Magnetfeldsensor (31) außerhalb einer zu der Drehachse (L12) koaxialen zylindrischen Einhüllenden des ersten Kupplungselements (16) und des zweiten Kupplungselements (17) angeordnet ist.

13. Kupplung nach einem der Ansprüche 10 bis 12,
**dadurch gekennzeichnet,**
**dass** die Magnetfeldquelle mit einem von dem ersten Kupplungselement (16) und dem zweiten Kupplungselement (17) verbunden oder integral ausgestaltet ist, und
**dass** das erste Magnetfeldbeeinflussungselement und/oder das zweite Magnetfeldbeeinflussungselement als eine weitere Magnetfeldquelle ausgestaltet ist, die mit dem anderen von dem ersten Kupplungselement (16) und dem zweiten Kupplungselement (17) verbunden oder integral ausgestaltet ist.

14. Kupplung nach einem der Ansprüche 10 bis 13,
**dadurch gekennzeichnet,**
**dass** die Kupplung (12) ein Schutzelement (7) umfasst, das zumindest abschnittsweise um das erste Kupplungselement (16) und das zweite Kupplungselement (17) angeordnet ist,
wobei der Magnetfeldsensor (31) an dem Schutzelement (7) befestigt ist.

15. Gelenkwellenanordnung, umfassend:
ein drehbar angeordnetes Gelenkwellenelement (13), und
eine Kupplung (12) nach einem der Ansprüche 10 bis 14,
wobei das Gelenkwellenelement (13) mit dem ersten Kupplungselement (16) verbunden ist.
